(19)

Europäisches
Patentamt

European
Patent Office

Office européen
des brevets

(11) **EP 4 459 324 A1**

(12) **EUROPEAN PATENT APPLICATION**

(43) Date of publication:
**06.11.2024 Bulletin 2024/45**

(21) Application number: **23174955.7**

(22) Date of filing: **23.05.2023**

(51) International Patent Classification (IPC):
**G01S 15/931** (2020.01) **G01S 13/931** (2020.01)
**G01S 17/931** (2020.01)

(52) Cooperative Patent Classification (CPC):
**G01S 13/931; G01S 7/4808; G01S 15/931;**
**G01S 17/89; G01S 17/931; G05D 1/2295;**
**G05D 1/242; G05D 1/2464; G05D 1/43**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **04.05.2023 US 202363500096 P**

(71) Applicant: **Aptiv Technologies AG**
**8200 Schaffhausen (CH)**

(72) Inventors:
• **SZLACHETKA, Marek Jacek**
**32-440 Sulkowice (PL)**
• **BORKOWSKI, Dariusz**
**30-689 Kraków (PL)**

(74) Representative: **Manitz Finsterwald**
**Patent- und Rechtsanwaltspartnerschaft mbB**
**Martin-Greif-Strasse 1**
**80336 München (DE)**

(54) **METHOD FOR RESOLVING LOCAL MINIMA PROBLEMS IN DETERMINATIONS OF A FREE SPACE BOUNDARY IN A VEHICLE ASSISTANCE SYSTEM**

(57) This document describes techniques and systems for resolving local minima problems in determining a free space boundary for a vehicle assistance system. An exemplified method includes obtaining a parametric curve that approximates spatial information representing a free space boundary near a host vehicle. The parametric curve is defined by a plurality of control points. The method then determines an approximation error indicator for each control point of the plurality of control points. The approximation error indicator represents a local approximation error of a section of the parametric curve near the respective control point. Based on the approximation error indicator, the method further includes modifying the section of the parametric curve near the respective control point. In this way, a more robust technique is disclosed for a vehicle assistance system to address local minima problems and generate more accurate parametric curves.

*FIG. 7*

EP 4 459 324 A1

**Description**

**TECHNICAL FIELD**

The present disclosure relates to a computer-implemented method, an apparatus, and a computer program for resolving local minima problems in determining a free space boundary of a physical environment surrounding a vehicle in a vehicle assistance system. In addition, the present disclosure relates to a vehicle comprising the aforementioned apparatus.

**BACKGROUND**

Nowadays, vehicles (e.g., cars, robots, forklift trucks, ships, etc.) are oftentimes operated by vehicle assistance systems (e.g., by Advanced Driving Assistance Systems (ADAS)) to provide some degree of driving assistance to their driver. However, a vehicle assistance system may also control a vehicle semi-autonomously or fully autonomously. Such control requires that the vehicle assistance system of a vehicle has sufficient knowledge of its surroundings to be aware of impassible regions (e.g., walls, obstacles, and other vehicles), to avoid collisions and allow the vehicle to navigate safely through its surrounding environment. To reliably distinguish between impassible regions and free space, a model must be provided that differentiates the free space from the impassible regions surrounding a vehicle. As a result, modeling and estimating the current local environment by processing sensor measurement data is important for a vehicle assistance system.

However, there is a need for a method in a vehicle assistance system for determining a free space boundary of a physical environment, which reduces the computational resources required for processing a parametric curve representing the free space boundary while at least preserving the shape and approximation quality with respect to the real-world free space boundary. In particular, as the parametric-curve representation is iteratively updated to adapt to the dynamically changing environment, there is a need for a method to avoid scenarios where the approximator is stuck in a local minimum (i.e., an approximation error reaches a local minimum but the parametric curve does not reflect well the actual shape of the free space boundary).

**SUMMARY**

This document describes techniques and systems for resolving local minima problems in determining a free space boundary for a vehicle assistance system. An exemplified method includes obtaining a parametric curve that approximates spatial information representing a free space boundary near a host vehicle. The parametric curve is defined by a plurality of control points. The method then determines an approximation error indicator for each control point of the plurality of control points. The approximation error indicator represents a local approximation error of a section of the parametric curve near the respective control point. Based on the approximation error indicator, the method further includes modifying the section of the parametric curve near the respective control point. In this way, a more robust technique is disclosed for a vehicle assistance system to address local minima problems and generate more accurate parametric curves.

This document also describes systems, other configurations, and computer-executable instructions to perform the above-summarized method.

This Summary introduces simplified concepts related to resolving local minima problems in determining a free space boundary for a vehicle assistance system described in the Detailed Description and Drawings. This Summary is not intended to identify essential features of the claimed subject matter, nor is it intended to determine the scope of the claimed subject matter.

**BRIEF DESCRIPTION OF THE DRAWINGS**

The details of one or more aspects of resolving local minima problems in determining a free space boundary of a physical environment surrounding a vehicle in a vehicle assistance system are described in this document with reference to the following figures. The same numbers are often used throughout the drawings to reference similar features and components:

FIG. 1 illustrates an exemplified visualization of parametric curves;
FIG. 2 illustrates exemplified longitudinal and lateral one-dimensional (1D) components of a parametric curve in the S-Domain;
FIG. 3 illustrates an exemplified approximation of a free space boundary based on 25 control points;
FIG. 4 illustrates an exemplified approximation of a free space boundary based on 50 control points according to known methods;

FIG. 5 illustrates an exemplified configuration of a vehicle that may implement the techniques described herein for resolving local minima problems in determining a free space boundary in a vehicle assistance system;

FIG. 6 illustrates an exemplified overview of techniques associated with determining free space boundaries according to aspects of this disclosure;

FIG. 7 illustrates an exemplified environment surrounding a vehicle according to aspects of the present invention;

FIG. 8 illustrates longitudinal and lateral components of parametric curves and the corresponding basis functions according to aspects of this disclosure;

FIG. 9-1 illustrates a local minimum problem that may arise in generating or updating a parametric curve to represent a free space boundary;

FIG. 9-2 illustrates a maximum distance used in calculating an approximation error indicator according to aspects of this disclosure; and

FIG. 10 illustrates an exemplified method for resolving local minima problems in determining a free space boundary in a vehicle assistance system.

## DETAILED DESCRIPTION

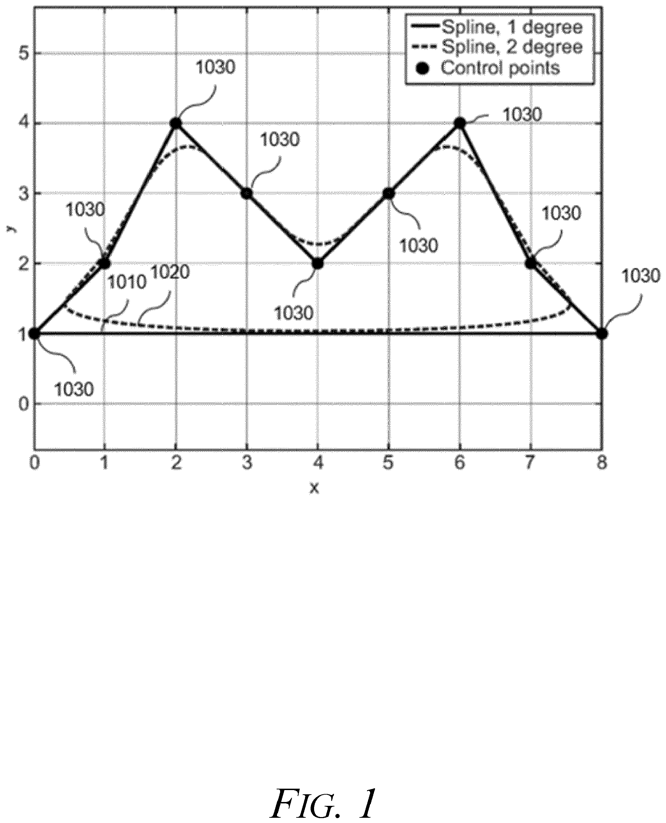

Figure 1 illustrates an exemplified visualization of parametric curves. In particular, Figure 1 illustrates an exemplified visualization of a two-dimensional (2D) parametric curve (i.e., a B-spline curve). Parametric curves may consist of piecewise polynomials of a specific degree. As an example, Figure 1 depicts a first parametric curve 1010 of degree one (illustrated by the solid line) and a second parametric curve 1020 of degree two (illustrated by the dashed line). Both parametric curves 1010, 1020 are fitted based on a plurality of control points 1030, each control point 1030 having a position in cartesian coordinates. In this example, nine control points 1030 are used. As can be seen, the first parametric curve 1010 of degree one connects the control points 1030 using straight lines between successive control points 1030. By contrast, the second parametric curve 1020 of degree two is generated using the control points 1030 to generate curved lines and thus approximates the shape of the first parametric curve 1010 in terms of a curved line. For a B-spline curve with a degree greater than one, the control points 1030 act as weights of basis functions (e.g., magnets in a 2D plane).

A commonly used type of model, for example, described by S. Steyer, G. Tanzmeister and D. Wollherr, "Grid Based Environment Estimation Using Evidential Mapping and Particle Tracking" in IEEE Transactions on Intelligent Vehicles, vol. 3, no. 3, pp. 384-396, Sept. 2018, is a grid-based representation of the environment derived from processing data provided by sensors, for example ranging or odometry sensors, of the vehicle. However, due to the large number of grid cells required for representing the local environment, calculations performed on such models require lots of computational resources, which are typically limited to a vehicle assistance system embedded in a vehicle. In addition, storing grid-based models requires a large amount of memory. Also, if models or parts of models are shared between vehicles, a large amount of data has to be communicated, e.g., by means of a Vehicle-to-Vehicle (V2V) communication interface.

In order to overcome these drawbacks, other methods known in the art suggest altering the grid itself using compression techniques. An example is the quadtree-based approach utilized in G. Kraetzschmar, G. P. Gassull, and K. Uhl, "Probabilistic Quadtrees for Variable-Resolution Mapping of Large Environments, " in Proc. Of the 5th IFAC/EURON Symposium on Intelligent Autonomous Vehicles, Lisbon, Portugal, jul 2004 for two-dimensional (2D) grids.

Another known approach is to encode the information contained in the grid in a parametric form, which further reduces the required storage. Only function-specific information such as road boundaries, for example, suggested by M. Darms, M. Komar, and S. Lüke, "Map based Road Boundary Estimation ", in Proc. of the IEEE Intelligent Vehicles Symposium, San Diego, California, USA, June 2010, or moving objects, as suggested in T.-N. Nguyen, M.-M. Meinecke, M. Tornow, and B. Michaelis, "Optimized Grid-Based Environment Perception in Advanced Driver Assistance Systems ", in Proc. of the IEEE Intelligent Vehicles Symposium, Xi'an, Shaanxi, China, June 2009, pp. 425 430, have been extracted from grids and represented in a compact, parametric way.

To provide a function-independent, generic map representation, M. Schreier, V. Willert and J. Adamy, "From grid maps to Parametric Free Space maps - A highly compact, generic environment representation for ADAS", 2013 IEEE Intelligent Vehicles Symposium (IV), 2013, pp. 938-944, proposes a highly compact, generic representation of a driving environment, which is called a Parametric Free Space (PFS) map, wherein the free space represents the passable space for a vehicle. A PFS map is a continuous, bird's-eye view and 2D representation of the local, static environment around a vehicle. PFS maps do not model the world by discrete grid cells but describe the free space via a flexible and closed curve in a parametric form. The proposed algorithm generates an occupancy grid based on sensor data and corresponding image analysis. The outer occupancy boundaries of the grid serve as a measurement vector for recursive estimation of control points of a closed B-spline curve. The spline is tracked and updated over time according to new environment measurements. A fixed number of spline control points is suggested, with the control points equidistantly distributed along the spline. As a result, even complex static environments may be modeled relatively precisely while reducing the amount of required storage compared to a grid-based representation.

However, due to the fixed number of spline control points, which are equally distributed along the entire spline (e.g., in the S-domain of the spline), this approach leads to a number of control points not matching the local complexity of a boundary shape. In other words, too many control points may be used at positions where the shape of the boundary has very low curvature, and too few control points may be used where the shape of the boundary is locally complex. Hence, the resulting spline may not adequately match the boundary of the free space. Moreover, an unnecessarily large number of control points may be used.

In Yang et al.: "Control Point Adjustment for B-Spline Curve Approximation ", Computer-Aided Design 36 (2004) 639-652, an approach for control point adjustment for a B-Spline Curve approximation is presented. This approach is based on a reference curve for local complexity determination to increase the accuracy of the approximation. However, for unknown/changing environments, as is the case for most vehicle assistance systems, no reference curve is available.

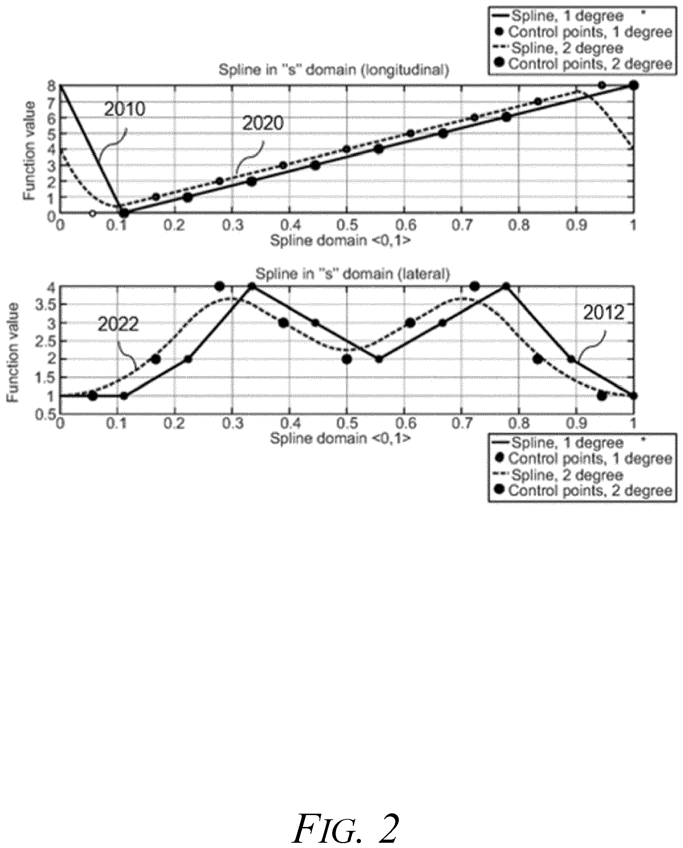

Figure 2 illustrates longitudinal and lateral 1D components of a parametric curve in the S-Domain. In particular, Figure 2 illustrates the longitudinal and lateral components of the parametric curves 1010, 1020 illustrated in Figure 1. For illustration purposes, an offset is applied between the splines of degrees one and two. The first diagram of Figure 2 (top) depicts the longitudinal component 2010 of the first parametric curve 1010 of degree one, which is illustrated by a solid line, and the longitudinal component 2020 of the second parametric curve 1020 of degree two, which is illustrated by a dashed line. By contrast, the second diagram of Figure 2 (bottom) depicts the lateral component 2012 of the first parametric curve 1010 of degree one, which is illustrated by a solid line, and the lateral component 2022 of the second parametric curve 1020 of degree two, which is illustrated by a dashed line.

In general, a two-dimensional curve (e.g., the parametric curves 1010 and 1020) may be created from two one-dimensional curves (e.g., the parametric curves 2010 and 2012 or 2020 and 2020, respectively) by using s-values as a free parameter for both components, wherein the first one-dimensional curve describes the longitudinal component, and the second one-dimensional curve describes the lateral component. Both one-dimensional curves may be of any but the same degree. Accordingly, the two-dimensional curve composed of two one-dimensional curves must have the same degree as the corresponding one-dimensional curves. The corresponding control points are indicated by smaller and bigger black points, respectively. In both diagrams of Figure 2, the x-axis represents the parametric curve S-domain in a range from 0 to 1, whereas the y-axis represents the function value of the parametric curve component.

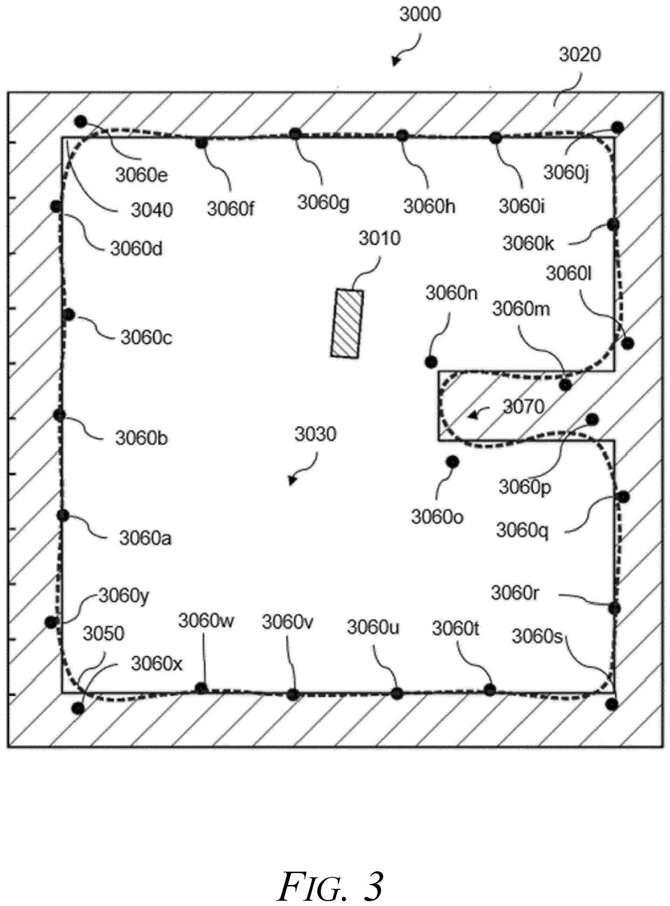

Figure 3 illustrates the approximation of a free space boundary based on 25 control points 3060. In particular, Figure 3 illustrates an environment 3000 that may surround a vehicle 3010. The environment 3000, in this example, comprises an impassible region 3020 (e.g., a wall or other physical obstacles) forming a corresponding free space 3030 in which the vehicle 3010 may move around. In accordance with the shape of the impassable region 3020, the free space 3030 is described by a free space boundary 3040 (solid line).

Free space boundary 3040 is approximated by a parametric curve 3050 (dashed line), defined by 25 control points 3060a-y. The control points 3060a-y have been determined and set according to known methods, for example by the method according to M. Schreier, V. Willert and J. Adamy, "From grid maps to Parametric Free Space maps - A highly compact, generic environment representation for ADAS", 2013 IEEE Intelligent Vehicles Symposium (IV), 2013, pp. 938-944. Thus, the control points 3060a-y are equidistantly distributed along parametric curve 3050. Thus, adjacent control points 3060 (e.g., between control points 3060a and 3060b and control points 3060f and 3060g) have the same distance.

In general, the free space boundary 3040 and/or the parametric curve 3050 may be determined from sensor data of at least one sensor of the vehicle 3010. In another example, the free space boundary 3040 and/or the parametric curve 3050 may be determined based on another data structure as input (e.g., an occupancy grid) generated based on the sensor data. Alternatively, the free space boundary 3040 and/or the parametric curve 3050 may be received from memory. The free space boundary 3040 and/or the parametric curve 3050 may be determined based on the sensor data in cases where the assistance system of the vehicle is turned on or when the vehicle's environment changes (e.g., when the vehicle moves). In these cases, it may be necessary to determine the free space boundary 3040 before modifying (e.g., optimizing) the distribution of the plurality of control points 3060 of the parametric curve 3050. In cases where the parametric curve 3050 has already been determined and no (re-)determining is necessary (for the moment), the already determined parametric curve, which may be saved into the vehicle's memory, may be received from the memory. This may be reasonable in situations where the environment 3000 of vehicle 3010 does not change or when a parametric curve 3050 has been determined based on the current environment of the vehicle and saved into memory before being further optimized.

Generating the parametric curve 3050 based on sensor data of vehicle 3010 may allow for precise modeling of environment 3000 (e.g., the physical environment surrounding the vehicle). Accordingly, the resulting parametric curve 3050 may achieve a high approximation quality of the actual free space boundary 3040.

The parametric curve 3050 may be fitted based on a parametric curve configuration including a parametric curve degree and/or the plurality of control points (e.g., the number of control points initially selected for spanning the parametric curve). In this way, the parametric curve 3050 may be flexibly adjusted (e.g., the parametric curve's shape) to requirements defined by the changing environment 3000 of vehicle 3010. In general, a parametric curve 3050 may be any suitable parametric curve that is described by a plurality of control points 3060 such as a $n^{th}$ degree B-spline or non-uniform rational B-spline (NURBS).

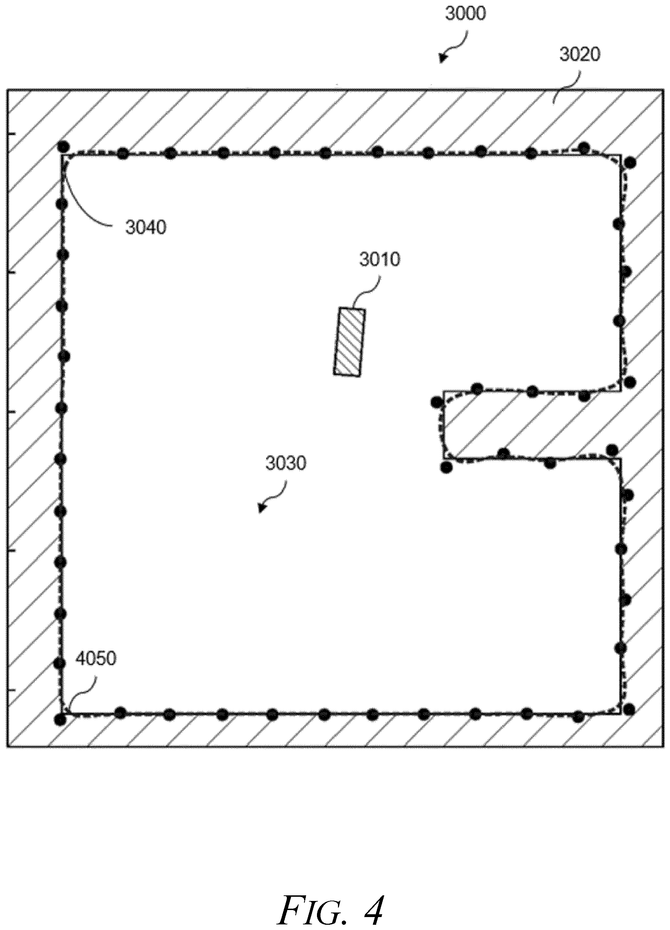

Figure 4 illustrates the approximation of a free space boundary based on 50 control points according to known methods. To improve approximation quality, known methods, for example, the method according to M. Schreier, V Willert and J. Adamy, "From grid maps to Parametric Free Space maps - A highly compact, generic environment representation for ADAS", 2013 IEEE Intelligent Vehicles Symposium (IV), 2013, pp. 938-944, simply increase the number of equidistantly distributed control points, as illustrated in Figure 4. Here, the number of control points (indicated by the black circles) has been increased to 50. As can be seen, compared to parametric curve 3050 of Figure 3, parametric curve 4050 fitted to the 50 control points much better approximates the free space boundary 3040. In other words, the shape of parametric curve 4050 comes much closer to the shape of free space boundary 3040 and thus provides an improved approximation quality.

However, simply increasing the number of control points has at least two drawbacks. First, increasing the number of control points increases the amount of memory for storing the control points and thus for storing the parametric curve 4050. Hence, if vehicles 3010 communicate such a parametric curve among each other (e.g., by a V2V communication interface), higher communication bandwidth is required. In addition, processing a parametric curve based on an increased number of control points becomes more complex, slowing down the corresponding process. In general, one can see that using a fixed (i.e., hard coded) number of control points may either result in having too many control points, specifically in situations where the environment may be sufficiently approximated with fewer control points, or may result in having too few control points in situations where the environment may not be sufficiently approximated with the fixed number of control points. In addition, having too many unnecessary control points in a section of the parametric curve may result in oscillatory behavior of the parametric curve (e.g., overshooting or high dynamics) which may decrease the approximation quality or result in local minima problems.

To overcome the above-mentioned drawbacks at least in part, the disclosed techniques described herein require fewer control points than prior art methods. In addition, if the number of control points is not reduced, the algorithm may increase approximation quality, especially if local minima problems exist.

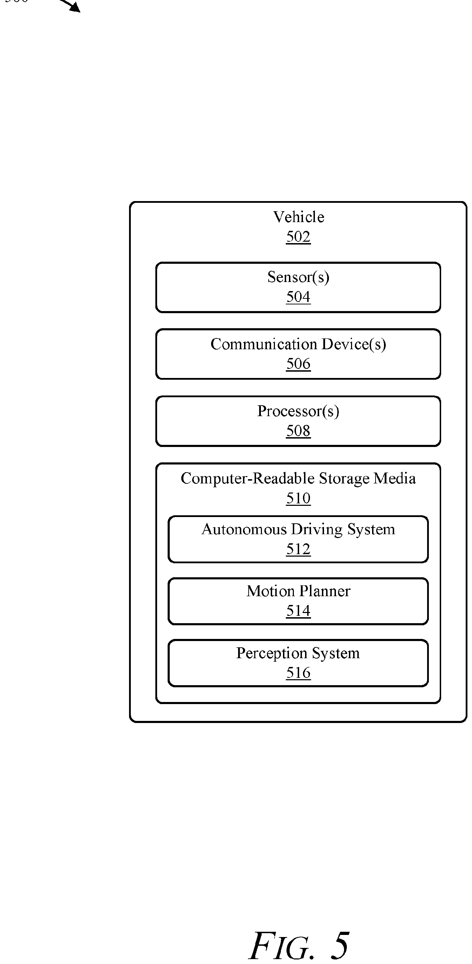

Figure 5 illustrates an example configuration 500 of a vehicle 502 that may implement the techniques described herein for determining a free space boundary in a vehicle assistance system. The configuration 500 is for vehicle 502 with an autonomous driving system 512. Also included in vehicle 502 are a motion planner 514 and a perception system 516. The configuration 500 may be divided into several layers, where each upper layer uses information provided by lower layers.

Vehicle 502 includes one or more sensors 504, one or more communication devices 506, one or more processors 508, and computer-readable storage media (CRM) 510. CRM 510 stores instructions associated with the autonomous driving system 512, the motion planner 514, and the perception system 516.

The Sensors 504 are part of the bottom layer of configuration 500. The sensors 504 may be mounted to, or integrated within, any portion of the vehicle 502 to provide an instrumented field of view. Sensors 504 produce raw information about vehicle 502 and the surrounding environment. As used herein, the sensors 504 may include camera systems, radar systems, lidar systems, or ultrasonic systems to detect and track objects in the environment surrounding vehicle 502 and detect a free space boundary for the drivable area surrounding vehicle 502. Radar systems may provide information regarding the range, radial velocity, and azimuth angle of nearby objects. Lidar and ultrasonic systems may provide a map of reflecting objects and indicate range information associated with those objects. Camera systems may be used to provide range information or to determine object classes associated with nearby objects.

Sensors 504 may provide sensor data regarding objects, including tracking data and free space boundaries. The data can, for example, indicate a relative position (e.g., range and lateral positioning), heading, or speed relative to vehicle 502 for the objects, including stationary objects that make up a free space boundary. In some cases, vehicle 502 includes multiple types of sensors 504, such as a radar system and a camera, that provide a larger instrument field-of-view or improved detection of objects.

The perception system 516 may include a vehicle state estimator and an environment perception system. The vehicle state estimation layer utilizes raw data from the sensors 504 to obtain accurate information about vehicle 502, including its position, speed, orientation (e.g., yaw), or yaw rate. The environment perception layer also uses data from sensors 504 to provide information about the surrounding environment, both the dynamic world (e.g., moving cars and pedestrians) and the stationary world (e.g., guardrails). The topmost layers include the autonomous driving system 512 which provides features and functions that support daily driving (e.g., lane-keeping assistance), and the motion planner 514 which is responsible for finding a safe path from point A to point B without colliding with objects.

The communication devices 506 include any radio or transceiver configured to send or receive signals for a vehicle. The communication devices 506 may include telecommunication radios, satellite transceivers, and the like.

The processors 508 (e.g., an energy processing unit or electronic control unit) may be a microprocessor or a system-on-chip. Processors 508 execute instructions stored in CRM 510. For example, processors 508 may process sensor data from the sensors 504 and determine characteristics (e.g., relative positioning, range, and predicted tracks) of the free space boundary or other objects in the surrounding environment. The processor 508 may then control the autonomous driving system 512, the motion planner 514, or the perception system 516 to navigate the environment and avoid potential collisions or unsafe driving. For example, processors 508 may control, based on data from sensors 504, the motion planner 514 to determine a navigation path for vehicle 502 to avoid objects and remains within the free space. The processors 508 may also determine an operating instruction for vehicle 502 based on the parametric curve affecting a function of the autonomous driving system 512 (e.g., conducting a vehicle path planning, affecting control of vehicle 502 during a parking process) or the perception system 516 (e.g., displaying the parametric curve on a display of vehicle 502, triggering a warning).

The vehicle state estimation (VSE) module of the perception system 516 provides information about vehicle 502, including position, velocity vector, heading, sideslip, acceleration, yaw, and yaw rate. The VSE module may use dead reckoning to calculate the current position and heading of vehicle 502 based on previously determined position, speed, and direction. The VSE module may also use inertial measurement units (IMUs) (e.g., gyroscopes, magnetometers, accelerometers) to provide more precise positioning information. The VSE module may also use a Global Navigation Satellite System (GNSS) to determine the absolute position of vehicle 502. Many VSE modules incorporate data from one or more of dead reckoning systems, GNSS, lidar systems, radar systems, and cameras to improve their accuracy.

The environment perception module of the perception system 516 provides information about the surrounding environment, which may include a dynamically changing environment, partially occluded objects, or bad weather conditions. The surrounding environment may be divided into two complementary categories: dynamic environment and stationary environment. Stationary world estimators generally provide information about the boundaries of the space within which vehicle 502 may maneuver. The stationary environment is often represented using grid maps (e.g., occupancy grid maps) that use cells to hold information about part of the surrounding environment. The perception system 516 (or another system of the vehicle 502) also generates parametric curves to define the free space boundaries in the environment.

Motion planner 514 generates a collision-free trajectory from a starting position to a destination position. The motion planner 514 may include a mission planner, behavior planner, and local planner.

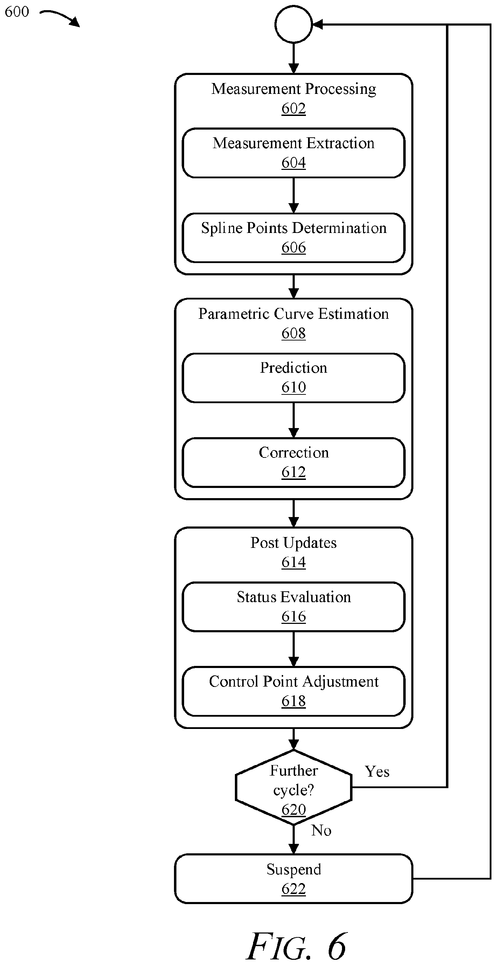

Figure 6 illustrates an overview of techniques associated with determining free space boundaries according to aspects of the present invention. In particular, Figure 6 illustrates an overview of algorithm 600 according to aspects of the present invention for adding additional control points in response to a local minimum issue in determinations of a free space boundary in a vehicle assistance system. Algorithm 600 provides techniques to preserve or improve the approximation quality of a parametric curve while at the same time reducing (when the approximation quality is preserved), maintaining (if the approximation quality is improved), or increasing (when too few control points are used to approximate a complex shape or to overcome a local minimum) the number of control points. Algorithm 600 determines the free space boundary of the stationary world using a closed 2D B-spline as a mathematical model.

In step 602, called "measurement processing", raw measurement data (e.g., sensor data from at least one sensor 504 of vehicle 502) is obtained and (pre-)processed so it can be used for the subsequent step 608. The measurement processing of step 602 includes measurement extraction 604 and spline point determination 606. In measurement extraction 604, measurement points are extracted from the raw measurement data, which may be retrieved by using the sensor(s) 504 of vehicle 502 to sample the free space boundary of the environment. The measurement data may be provided as an output from occupancy grid processing.

In spline point determination 606, an association between each measurement point and spline point (e.g., a point on the parametric curve) may be determined. A Kalman filter or information filter may use this information in step 608 to estimate the parametric curve.

In step 608, called "parametric curve estimation", a parametric curve is obtained. In cases where there is no existing parametric curve which may otherwise be obtained from memory or be retrieved from another vehicle (e.g., by a V2V communication interface), a new parametric curve may be created/predicted in step 610 ("prediction") by an estimator (e.g., a Kalman filter - prediction step). Predicting the parametric curve may be based on a vehicle movement compensation (e.g., the movement of vehicle 502 may introduce some uncertainties regarding the positions). After step 610 (e.g., after a parametric curve is obtained either by receiving an already existing one or by creating a new one), the parametric curve may be corrected in step 612 ("correction") based on the processed raw measurement data (e.g., a Kalman filter - correction step). In step 612 ("correction"), the control points are updated based, for example, on the newly received measurement points and their corresponding spline points.

In step 614, called "post updates", the parametric curve is updated (e.g., a plurality of control points of the parametric curve is modified). In step 616, called "status evaluation", states of the plurality of control points of the parametric curve are evaluated. A spline point is a point that lies on the parametric curve which approximates the free space boundary of an environment. More specifically, in step 616, spline points corresponding to the measurement points are identified, which are then used to evaluate and update states of the control points of parts or portions of the parametric curve, which may be affected by new measurement points.

In step 618, called "control point adjustment", control point parameters (e.g., a shape complexity of the parametric curve section affected by the control point) are evaluated to reduce or increase the number of control points or adapting their distribution while maintaining or improving the approximation quality of the corresponding parametric curve with respect to a free space boundary or potentially reducing memory consumption.

Afterward, it is determined in step 620 whether a further cycle is required, which may depend on different criteria iterations (e.g., for reducing the number of control points and/or improving the approximation quality or adapting the parametric curve to a changed physical environment). If it is determined that a further cycle is required, the algorithm 600 again executes the "measurement processing" according to step 602. If it is determined that no further cycle is required, algorithm 600 moves on to step 622, called "suspend".

In step 620, if vehicle 502 is moving, new measurements by means of the sensors 504 of vehicle 502 may be conducted constantly due to a changing environment. Hence, new measurements will be received that require an update of the spline. Therefore, when it is determined that the vehicle is moving, it may be decided to move to step 602 and start a further cycle of algorithm 600.

In step 622, called "suspend", algorithm 600 may remain paused, for example when the vehicle's engine or the vehicle assistance system is turned off. However, when the vehicle's engine or the vehicle assistance system is turned on again, the algorithm may restart execution by moving to step 602. This may also be the case when vehicle 502 has stopped moving and no further measurements are conducted.

In step 622, if algorithm 600 has reached this step, it may suspend execution. However, execution may be resumed if, for example, the engine of vehicle 502 or the corresponding vehicle assistance system executing the algorithm 600 is turned on again. In this case, algorithm 600 may move to step 602 to start a further cycle.

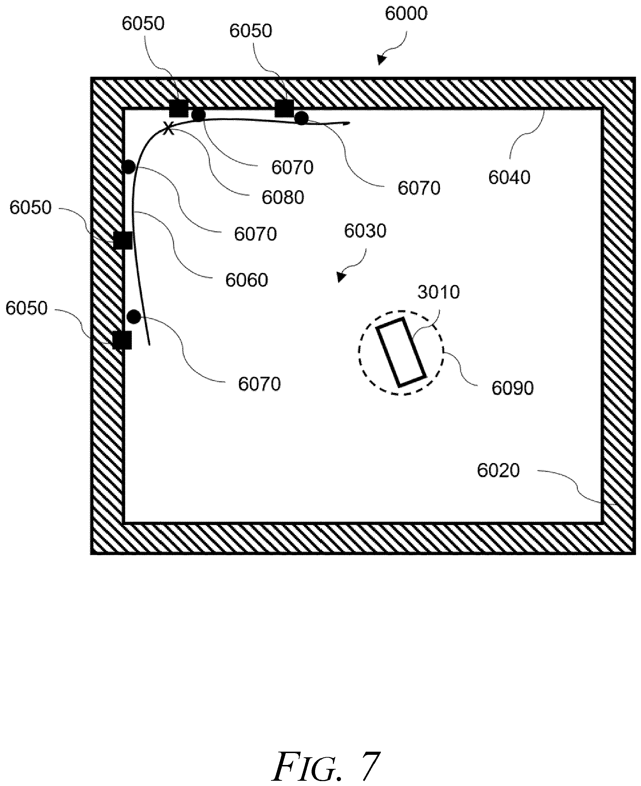

Figure 7 illustrates the environment surrounding a vehicle according to aspects of the present invention. Parametric curve estimation (step 608 of FIG. 6) is further described in reference to Figure 7, which illustrates an environment of 6000 that may surround vehicle 3010. Environment 6000 in this example includes an impassible region 6020 (e.g., a wall) in square shape and thus forms a free space 6030 which is also square shaped and where vehicle 3010 may move around. The free space 6030 is represented by a square-shaped free space boundary 6040.

A parametric curve 6060 (only partially shown here) and/or its corresponding control points 6070 may be retrieved from a memory. This could be the case if vehicle 3010 has already passed environment 6000 at a previous point and may have stored the corresponding parametric curve 6060 in memory for further usage. In addition, it is also possible that vehicle 3010 has retrieved parametric curve 6060 and/or the corresponding control points 6070 from another vehicle that previously passed environment 6000, e.g., by means of a V2V communication interface.

However, in the prediction step (step 610 of Figure 6), the generation of a parametric curve 6060 may also begin from scratch. In this case, the free space boundary 6040 may be determined by measurement points 6050 located on free space boundary 6040 and indicated by black squares, which may be obtained by sensors of vehicle 3010, like ranging or odometry sensors. In the example of Figure 7, for simplicity, only four measurement points 6050 are illustrated. However, to adequately define the shape of the free space boundary 6040, more than four measurement points 6050 may be required. The measurement points 6050 may be mapped onto a cartesian coordinate system according to environment 6000. An initial parametric curve 6090 (indicated by the dashed circle) surrounding vehicle 3010, preferably circular, may be used as a starting point. Then, according to the measurement points 6070, the shape of parametric curve 6060 may be extended to approximate the shape of free space boundary 6040. In other words, the control points 6070 to which parametric curve 6060 is fitted, are set accordingly. Independent of whether parametric curve 6060 has been retrieved from memory or has been generated from scratch, the parametric curve 6060 is corrected in the correction step (step 612 of Figure 6) based on the processed measurement data. During the operation of vehicle 3010, the measurement points 6050 (indicated by the black squares) may be updated. For example, new measurement points 6050 may be obtained from vehicle sensors and added to the free space boundary 6040, or measurement points 6050 may be dynamically removed due to the movement of vehicle 3010. Hence, measurement points 6050 may be updated over time, both when environment 6000 dynamically changes due to the movement of vehicle 3010 and when environment 6000 remains constant due to the non-movement of vehicle 3010.

At the end of parametric curve estimation (step 608 of Figure 6), parametric curve 6060 essentially corresponds to a parametric curve 3050, 4050 as described with respect to Figures 3 and 4, respectively, and thus comprises a relatively large amount of control points, wherein the distance between adjacent control points 6070 is essentially the same. Then, algorithm 600 moves on to post updates (step 614 of Figure 6).

As shown in Figure 3, the parametric curve 3050 does not correspond exactly to the free space boundary 3040 and thus only inaccurately approximates the shape of the free space boundary 3040. For example, in the upper left corner, the part of parametric curve 3050, which extends between the control points 3060d and 3060f, recognizably deviates from the rectangular corner of the free space boundary 3040. The parametric curve 3050 deviates even more from the shape of free space boundary 3040 when the complexity of the shape of free space boundary 3040 increases. This can be seen on the right side of Figure 3 where free space boundary 3040 has an inward indentation 3070. In this area, the part of parametric curve 3050, which extends between control points 3060l and 3060q, significantly deviates from the corresponding part of the shape of free space boundary 3040.

To improve approximation quality, known methods, for example, the method according to M. Schreier, V Willert and J. Adamy, "From grid maps to Parametric Free Space maps - A highly compact, generic environment representation for ADAS", 2013 IEEE Intelligent Vehicles Symposium (IV), 2013, pp. 938-944, simply increase the number of equidistantly distributed control points, as illustrated in Figure 4. Here, the number of control points (indicated by the black circles) has been increased to 50. As can be seen, compared to parametric curve 3050 of Figure 3, parametric curve 4050 fitted to the 50 control points much better approximates free space boundary 3040. In other words, the shape of parametric curve 4050 comes much closer to the shape of free space boundary 3040 and thus provides an improved approximation quality.

However, simply increasing the number of control points has at least two drawbacks. First, increasing the number of control points increases the amount of memory for storing the control points and thus for storing the parametric curve 4050. Hence, if vehicles 3010 communicate a parametric curve among each other (e.g., by a V2V communication interface), higher communication bandwidth is required. In addition, processing a parametric curve based on an increased number of control points becomes more complex, slowing down the corresponding process. In general, one can see that using a fixed (i.e., hard coded) number may either result in having too many control points, specifically in situations where the environment may be sufficiently approximated with fewer control points, or may result in having too few control points in situations where the environment may not be sufficiently approximated with the fixed number of control points (e.g., due to local minima problems). In addition, having too many unnecessary control points in a section of the parametric curve may result in oscillatory behavior of the parametric curve (e.g., overshooting or high dynamics), which may decrease the approximation quality.

Therefore, in the post updates step (step 614 of Figure 6), the parametric curve is updated according to identified optimization potential. This may either be based on the status evaluation of step 616 and/or the control point adjustment of step 618.

A control point may be associated with at least one state of a plurality of states (e.g., UPDATED, COASTED, NEW, OUT-OF-REACH). The UPDATED state may signal that the control point has been updated lately, i.e., a position of the control point has been verified by a corresponding measurement point from a vehicle sensor. Accordingly, the status indicator of a control point having the UPDATED state may indicate to maintain the control point and continue with executing the control point adjustment.

The COASTED state may signal that the control point has not been updated lately, e.g., the position of the control point has not been verified by a corresponding measurement (e.g., within a defined timespan). A time-since-last-update threshold may be defined as describing a duration/timespan in which the state of a control point is allowed not to be updated (i.e., the state of the control point stays COASTED). The time-since-last-update threshold may for example be defined as a duration in time units (e.g., milliseconds etc.) or be defined as a number of cycles, each cycle having a corresponding execution duration in time units. In the latter, a cycle refers to an execution of determining whether the control point is affected by a measurement point (e.g., the measurement point lies within the corresponding supporting interval) or not. Accordingly, if the last state update of the control point exceeds the time-since-last-update threshold (e.g., the control point is in the COASTED state for too long), the status indicator of the control point may indicate to remove the control point and skip the control point adjustment.

The NEW state may signal that the control point has been added to the plurality of control points of the parametric curve lately (e.g., within a defined timespan). Accordingly, the status indicator of a control point having the NEW state may indicate maintaining the control point and executing the subsequent steps. Once the defined timespan in which a state of a control point is defined as NEW, the state of the control point may be changed to COASTED, UPDATED, or OUT-OF-REACH, respectively.

The OUT-OF-REACH state may signal that the control point is no longer reachable/detectable by the vehicle's sensors. This may be the case if the distance of the vehicle to the control point is larger than the reach of the sensor (e.g., radar, camera, etc.) (e.g., a distance between the control point and the vehicle being larger an out-of-reach threshold) or the control point not being within a predefined area of interest surrounding the vehicle (e.g., a polygon) which can be determined by a (combined) field of view of the sensor(s) of the vehicle. Accordingly, the status indicator of a control point having the OUT-OF-REACH state may indicate to remove the control point.

Providing a wide range of conditions increases the accuracy of determining whether a control point may be removed. Therefore, control points are kept that are required for maintaining or improving approximation quality. As a result, the efficiency of the free space boundary determination is further increased resulting in an optimized memory consumption since control points are only maintained that are indeed required.

In general, the purpose of the status evaluation (step 616 of Figure 6) is to determine a status indicator for each control point of the plurality of control points. The status indicator may indicate whether the control point is to be removed or maintained based on an (evaluated) state of the control point (e.g., COASTED, UPDATED, NEW, OUT-OF-REACH). In this context, evaluation may refer to determining the current state of a control point.

The determining of whether the current state of a control point is UPDATED or COASTED, is further described based on Figures 7, 8, and 9. As outlined above, a single measurement is represented by a measurement point 6050 that may be mapped onto a cartesian coordinate system. The measurement points 6050 may be approximated by parametric curve 6060. Parametric curve 6060 may comprise footprints or spline points, wherein one spline point 6080 is visually indicated in Figure 7, which is indicated by an X. The spline point 6080 is a point that lies on parametric curve 6060 that approximates the free pace boundary 6040. The spline points corresponding to the measurement points 6050 are identified. Then, a corresponding control point 6070 may be updated if a new measurement point 6050 is found in a control point's supporting interval corresponding to the spline point 6080.

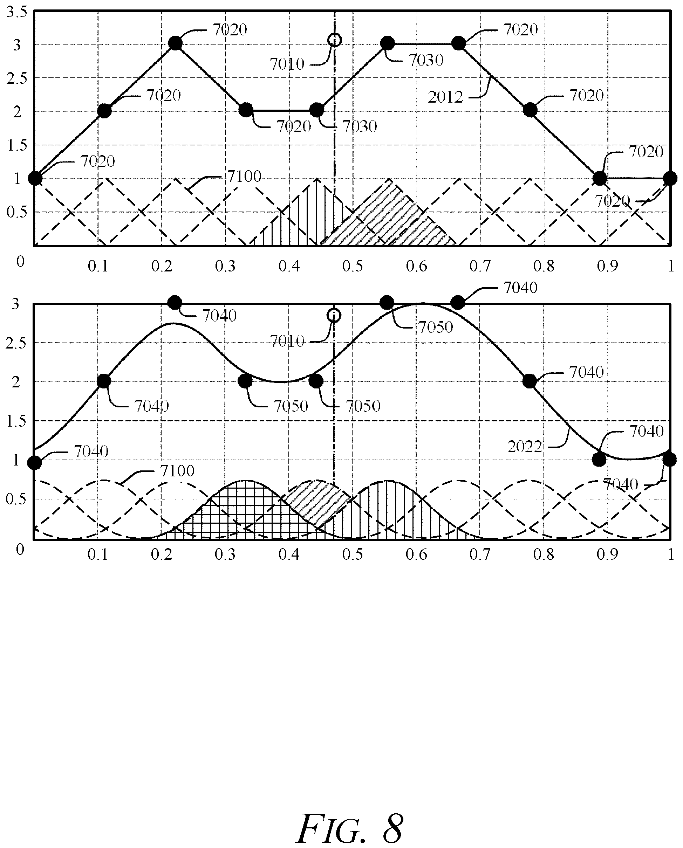

Figure 8 illustrates the longitudinal or lateral components of parametric curves and the corresponding basis functions according to aspects of this disclosure. The process of determining a current state of a control point is further described with respect to Figure 8, which illustrates the lateral component 2012 of the first parametric curve of degree one 1010 and the lateral component 2022 of the second parametric curve of degree two 1020 as illustrated in Figure 2. One of the control point parameters is its measurement status ($\Omega$). It contains information about the control point's age and measurement association. The measurement status can take one of several possible values: NEW, UPDATED, OUT-OF-REACH, or COASTED. All control points are initialized with the status NEW. A control point remains in the NEW state for a few cycles (e.g., 5). After that time, the control point can take one of the remaining state values. The status UPDATED of a control point is set when the spline has at least one measurement point within the corresponding supporting interval of the respective control point, otherwise, the status is set to COASTED, as illustrated in Figure 8.

The control point supporting interval is defined in Equation (1) as:

$$\Lambda_i = \left\{ s: B_i^{[n]}(s) \neq 0 \right\} \qquad (1)$$

where $\Lambda_i$ represents the ith control point supporting interval and $B_i^{[n]}$ represents the ith basis function of degree n corresponding to the ith control point.

If a uniform periodic B-spline is used, the above equation can be rewritten as Equation (2):

$$\Lambda_i = \begin{cases} \langle 0, \dot{\Lambda}_i \rangle \cup \langle \widehat{\Lambda}_i + 1, 1 \rangle & \text{if } \widehat{\Lambda}_i < 0 \\ \langle 0, \dot{\Lambda}_i - 1 \rangle \cup \langle \widehat{\Lambda}_i, 1 \rangle & \text{if } 1 < \dot{\Lambda}_i \\ \langle \widehat{\Lambda}_i, \dot{\Lambda}_i \rangle & \text{otherwise} \end{cases} \qquad (2)$$

where $\widehat{\Lambda}_i = \frac{i - 0.5n - 1.5}{N_q}$ , $\dot{\Lambda}_i = \frac{i + 0.5n - 0.5}{N_q}$ , i represents the control point index (1, 2, 3, ..., $N_q$), n represents the degree of the spline, and $N_q$ represents the number of control points.

In Figure 8, the corresponding basis functions 7100 underlying the fitted parametric curves 1010, 1020 are shown. Each of these basis functions 7100 spans one supporting interval per control point 7020, 7030, 7040, 7050. According to a new measurement point 7010, a subset of the plurality of control points 7030, 7050 may be affected/updated (e.g., a state of the corresponding control points 7030, 7050 may be set to UPDATED). The remaining part of the plurality of control points 7020, 7040, which are not updated, may be marked as coasted control points 7020, 7040 (e.g., a state of the corresponding control points 7020, 7040 may be set to COASTED). Whether a control point's state is set to updated or coasted may depend on whether the parametric curve domain value represented by the x-axis of the new measurement point 7010 intersects (e.g., lies within) the corresponding supporting interval of the respective control point.

With respect to the upper diagram of Figure 8, showing the lateral component 2012 of the first parametric curve of degree one 1010, once a new measurement point 7010 (indicated by the black square) is received, a subset of two control points 7030 (indicated by the white circles) of the plurality of control points 7030 of the lateral component 2012 is identified as updated. A control point 7030 is considered as updated if the parametric curve domain value according to the x-axis of the new measurement point 7010 intersects the supporting interval of the respective control point 7030. This is indicated by the black line crossing the new measurement point 7010 and the corresponding supporting interval. In this case, the two control points 7030 are identified. This is because the parametric curve domain value of the new measurement point 7010 intersects the supporting intervals of these two control points 7030. Therefore, the state of these two control points 7030 may be set to UPDATED. The remaining control points 7020 (indicated by black circles) are considered as not updated, because their respective supporting intervals are not intersected by the line that crosses the new measurement point 7010. Therefore, the state of these control points 7020 may be set to COASTED.

With respect to the lower diagram of Figure 8, showing the lateral component 2022 of the second parametric curve of degree two 1020, once a new measurement point 7010 (indicated by the black square) is received, a subset of three control points 7050 (indicated by the white circles) of the plurality of control points 7040, 7050 of the lateral component 2022 is identified as updated. A control point 7050 is considered as updated if the parametric curve domain value according to the x-axis of the new measurement point 7010 intersects the supporting interval of the respective control point. This is indicated by the black line crossing the new measurement point 7010 and the corresponding supporting interval. In this case, the three control points 7050 are identified. This is because the parametric curve domain value of the new measurement point 7010 intersects the supporting intervals of these three control points 7050. Therefore, the state of these three control points 7050 may be set to UPDATED. The remaining control points 7040 (indicated by black circles) are considered as not updated, because their respective supporting intervals are not intersected by the line that crosses the new measurement point 7010. Therefore, the state of these control points 7040 may be set to COASTED.

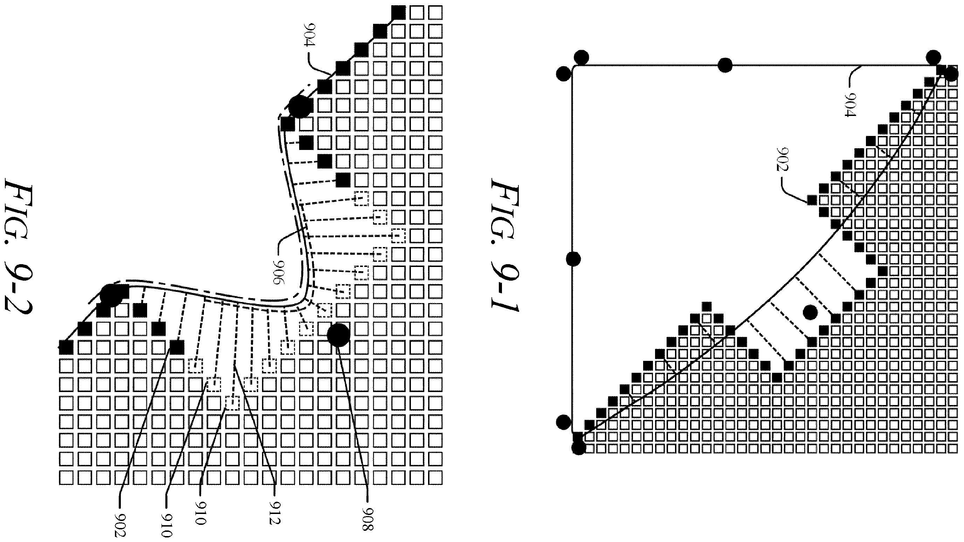

Figure 9-1 illustrates a local minimum problem that may arise in generating or updating a parametric curve to represent a free space boundary. In particular, Figure 9-1 illustrates how the approximation algorithm may get "stuck" in a local minimum. As described above, the proposed algorithm focuses mainly on performing the approximation (e.g., the best fit) to the provided measurement points 902 (illustrated as black-filled squares). It is an iterative process with a dynamically changing surrounding environment due to the movement of the host vehicle. During this process, it is possible that the spline or parametric curve 904 gets "stuck" somewhere between the measurement points 902 in a local minimum of approximation error as illustrated in Figure 9-1. This result is generally unacceptable from the view of the motion planner and other systems of the host vehicle.

To solve the local minimum problem, the control points parameters are extended with an approximation error indicator ($\Phi$). The approximation error indicator is filtered in time, providing information about a local approximation error. The local approximation error is estimated on the basis of the distance between the measurement points 902 and the corresponding spline points that lie within the limited supporting interval 906 of this control point 908 using Equations (3) - (7):

$$\Phi_{k,i} = (1 - c_\Phi)\Phi_{k-1,i} + c_\Phi \dot{\Phi}_{k,i} \qquad (3)$$

$$\dot{\Phi}_{k,i} = \begin{cases} 0, & \breve{\Phi}_{k,i} \leq 0 \\ \dfrac{\breve{\Phi}_{k,i}}{\Phi_{high}} & \breve{\Phi}_{k,i} \in \left(0, \Phi_{high}\right) \\ 1, & \Phi_{high} \leq \breve{\Phi}_{k,i} \end{cases} \qquad (4)$$

$$\breve{\Phi}_{k,i} = \begin{cases} d_i^{max} & \text{if } d_{th} < d_i^{max} \\ 0 & \text{otherwise} \end{cases} \qquad (5)$$

$$d_i^{max} = \max_j \left(\left\{d\left(r\left(s_j\right), z_j\right) : s_j \in \breve{\Lambda}_i\right\}\right) \qquad (6)$$

$$\breve{\Lambda}_i \subset \Lambda_i \qquad (7)$$

where $\Phi_{k,i}$ represents the ith control point approximation error indicator in the kth cycle, $\Phi_{high}$ represents an empirically chosen saturation threshold, $d(a, b)$ represents the Euclidean distance between the points $a$ and $b$, $d_i^{max}$ represents the refined maximum $d(a, b)$ of the ith control point, $r(s_j)$ represents the jth spline sample or point, $z_j$ represents the jth measurement point corresponding to the jth spline sample, $\breve{\Lambda}_i$ represents the limited supporting interval of the ith control point (it is a subinterval of A, limited symmetrically with respect to the interval center), and $c_\Phi$ represents a filter factor.

The raw approximation error indicator can take a value between 0 and 1. Distances are calculated between measurement points 910 and the corresponding spline points or samples located within the limited supporting interval 906 of the control point 908 of interest (e.g., see Equation (2) above) as illustrated in Figure 9-2.

Figure 9-2 illustrates the maximum distance used in calculating the approximation error indicator. The measurement points 910 (e.g., pixels) (illustrated as squares with a dashed border) within the limited supporting interval 906 (illustrated as the short-dashed line) for the control point 908 of interest, and line 912 represents the maximum distance between the corresponding spline sample and measurement points within the limited supporting interval 906.

Local measurement status analysis provides information about the spline segments affected by measurement. The approximation error indicator is used to make a decision on whether the spline segments need to be modified. In particular, the approximation error indicator can be used to determine whether a control point should be added.

Control point addition is an operation that adds a new control point to the existing set of control points. The operation only affects a fragment or subset of the parametric curve surrounding the newly added control point. The algorithm iterates over the control points and creates a list of new control point positions. For example, a new control point is added if the approximation error indicator for a respective control point is higher than an addition threshold, which may be specific to the approximation error or a general addition threshold.

The approximation error indicator does not describe a specific side of the control point of interest. Thus, if an $i$-th control point meets the control-point addition requirements, two new control points are added (e.g., a control point to its right and left sides, respectively). New control points are added at ($i - 1$) and ($i + 1$). If the control points $i$ and ($i + 1$) satisfy the control-point addition requirements, then new control points are added before the control point $i$, between the control points $i$ and ($i + 1$), and after the control point ($i + 1$). In this way, the algorithm avoids adding a new control point twice between $i$ and ($i + 1$). For example, parameters of a new control point may be determined using the following Equations (8) - (15):

$$\left[ q_{x,j}, q_{y,j} \right] = \left[ \frac{q_{x,i} + q_{x,i+1}}{2}, \frac{q_{y,i} + q_{y,i+1}}{2} \right] \qquad (8)$$

$$\sigma_{x,j}^2 = \begin{cases} \sigma_{x,i}^2 c_\sigma & \text{if } \sigma_{x,i+1}^2 < \sigma_{x,i}^2 \\ \sigma_{x,i+1}^2 c_\sigma & \text{otherwise} \end{cases} \qquad (9)$$

$$\sigma_{y,j}^2 = \begin{cases} \sigma_{y,i}^2 c_\sigma & \text{if } \sigma_{y,i+1}^2 < \sigma_{y,i}^2 \\ \sigma_{y,i+1}^2 c_\sigma & \text{otherwise} \end{cases} \qquad (10)$$

$$\Psi_j = 0.0 \qquad (11)$$

$$\Phi_j = 0.0 \qquad (12)$$

$$\Omega_j = \text{NEW} \qquad (13)$$

$$\tau_j = 1 \qquad (14)$$

$$\kappa_j = 1 \qquad (15)$$

where $c_\sigma$ represents a variance extension factor with a value greater than 1.0.

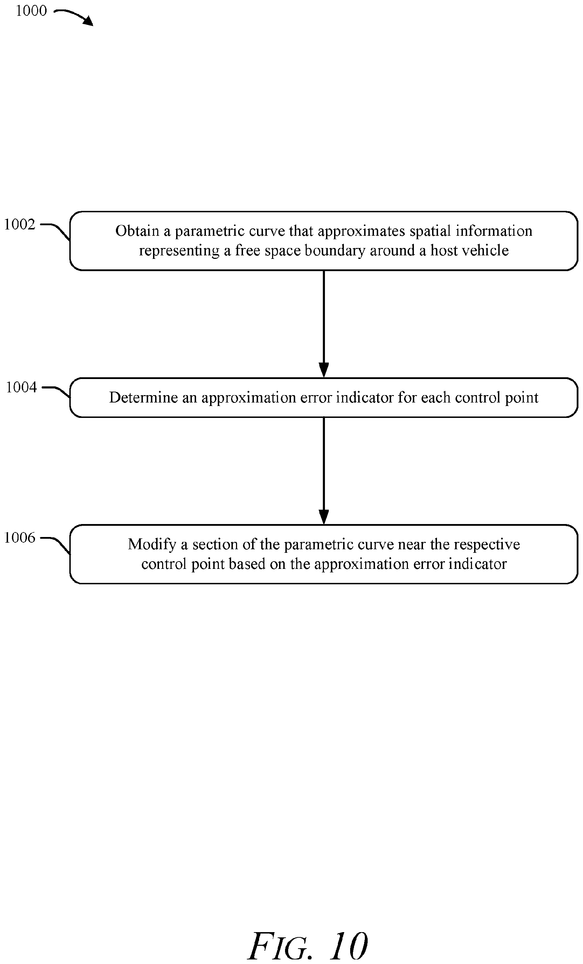

FIG. 10 illustrates an exemplified method 1000 for resolving local minima problems in determining a free space boundary in a vehicle assistance system. Method 1000 is shown as sets of operations (or acts) performed, but not necessarily limited to the order or combinations in which the operations are shown herein. Further, any of one or more of the operations may be repeated, combined, or reorganized to provide other methods. In portions of the following discussion, reference may be made to entities detailed in FIGs. 1 through 9-2, reference to which is made for example only. The techniques are not limited to performance by one entity or multiple entities.

At operation 1002, a parametric curve that approximates spatial information representing a free space boundary is obtained. For example, the perception system 516 of the vehicle 502 obtains the parametric curve 904. As described above, the parametric curve 904 is defined by multiple control points (e.g., control points 6070). The parametric curve 904 may be obtained by the perception system 516 determining it based on sensor data from the sensors 504 of the vehicle 502 or received from a memory of the vehicle 502.

At operation 1004, an approximation error indicator is determined for each control point. For example, the perception system 516 calculates the approximation error indicator for each control point using Equations (3) through (7). As described above, the approximation error indicator indicates a local approximation error of a section of the parametric curve 904 near the respective control point. The approximation error indicator for each control point is filtered in time by considering a previous calculation of the approximation error indicator for the respective control point.

The approximation error indicator is determined based on a distance between measurement points and corresponding spline points that line within a limited supporting interval for the respective control point, which is determined based on the number of control points and a spline degree of the parametric curve. As described above, the measurements points are obtained based on sensor data of the sensors 504 of the vehicle 502. The association between measurement points and corresponding spline points are determined based on an orthogonal distance between the measurement points and the spline points.

At operation 1006, the section of the parametric curve near the respective control point is modified based on the approximation error indicator. For example, the perception system 516 may modify the section of the parametric curve 904 near the respective control point based on the approximation error indicator for the respective control point. If the approximation error indicator for a respective control point is above an addition threshold, a number of control points in this section of the parametric curve 904 is increased. The addition threshold may be a general threshold or may be specific to the approximation error indicator calculations. The perception system 516 may increase the number of control points by adding a new or additional control point on both sides of the respective control point between the respective control point and adjacent control points in the respective section of the parametric curve 904. If control points are to be added for successive control points, the perception system 516 adds a new control point in the respective sections of the parametric curve on both sides of the successive control points without adding multiple new control points in between the successive control points.

The method 1000 may also include an additional operation of operating the vehicle 502 based on the parametric curve 904. For example, the motion planner 514 may determine an operating instruction for the vehicle 502 based on the parametric curve 904 affecting a function (e.g., displaying the parametric curve 904 on a display of the vehicle 502, conducting vehicle path planning, triggering a warning, or affecting control of the vehicle 502 during a parking process) of a vehicle assistance system of the vehicle 502.

The techniques according to the present invention may be implemented in terms of a computer program that may be executed on any suitable data processing device comprising means (e.g., a memory and one or more processors operatively coupled to the memory) being configured accordingly. The computer program may be stored as computer-executable instructions on a non-transitory computer-readable medium.

Embodiments of the present disclosure may be realized in any of various forms. For example, in some embodiments, the present invention may be realized as a computer-implemented method, a non-transitory computer-readable storage medium, or a computer system.

In some embodiments, a non-transitory computer-readable storage medium may be configured so that it stores program instructions and/or data, where the program instructions, if executed by a computer system, cause the computer system to perform a method, e.g., any of the techniques described herein, or, any combination of the techniques described herein, or, any subset of any of the techniques described herein, or, any combination of such subsets.

In some embodiments, a computing device may be configured to include a processor (or a set of processors) and a memory medium, where the memory medium stores program instructions, where the processor is configured to read and execute the program instructions from the memory medium, where the program instructions are executable to implement any of the various techniques described herein (or, any combination of the techniques described herein, or, any subset of any of the techniques described herein, or, any combination of such subsets). The device may be realized in any of various forms.

Although specific embodiments have been described above, these embodiments are not intended to limit the scope of the present disclosure, even where only a single embodiment is described with respect to a particular feature. Examples of features provided in the disclosure are intended to be illustrative rather than restrictive unless stated otherwise. The above description is intended to cover such alternatives, modifications, and equivalents as would be apparent to a person skilled in the art having the benefit of this disclosure.

The scope of the present disclosure includes any feature or combination of features disclosed herein (either explicitly or implicitly), or any generalization thereof, whether or not it mitigates any or all of the problems addressed herein.

While various embodiments of the disclosure are described in the foregoing description and shown in the drawings, it is to be understood that this disclosure is not limited thereto but may be variously embodied to practice within the scope of the following claims. From the foregoing description, it will be apparent that various changes may be made without departing from the scope of the disclosure as defined by the following claims.

**Claims**

1. A computer-implemented method for determining a free space boundary of an environment around a host vehicle, the method comprising:

   obtaining a parametric curve that approximates spatial information representing the free space boundary, the parametric curve being defined by a plurality of control points;
   determining an approximation error indicator for each respective control point of the plurality of control points, the approximation error indicator indicating a local approximation error of a section of the parametric curve near the respective control point; and
   modifying the section of the parametric curve near the respective control point based on the approximation error indicator.

2. The method of claim 1, wherein modifying the section of the parametric curve near the respective control point comprises increasing a number of control points in the section of the parametric curve near the respective control point in response to the approximation error indicator for the respective control point is above an addition threshold.

3. The method of claim 2, wherein increasing the number of control points comprises: adding a new control point in the section of the parametric curve near the respective control point on both sides of the respective control point between the respective control point and adjacent control points.

4. The method of claim 3, wherein increasing the number of control points for successive control points comprises: adding a new control point in the respective sections of the parametric curve on both sides of the successive control points without adding multiple new control points in between the successive control points.

5. The method of any one of claims 2 through 4, wherein the addition threshold is an approximation error threshold.

6. The method of any one of the previous claims, wherein the approximation error indicator for the respective control point is filtered in time.

7. The method of any one of the previous claims, wherein determining the approximation error indicator is based on a distance between measurement points and corresponding spline points that lie within a limited supporting interval for the respective control point.

8. The method of claim 7, wherein the limited supporting interval is determined based on the number of control points and a spline degree of the parametric curve.

9. The method of claim 7 or 8, wherein the measurement points are obtained based on sensor data of one or more sensors of the host vehicle.

10. The method of any one of claims 7 through 9, wherein the association between measurement points and the corresponding spline points are determined based on an orthogonal distance between the measurement points and the spline points.

11. The method of any one of the previous claims, wherein obtaining the parametric curve comprises:

    determining the parametric curve based on sensor data of one or more sensors of the host vehicle; or
    receiving the parametric curve from a memory.

12. The method of any one of the previous claims, wherein the method further comprises:
    determining an operating instruction for the host vehicle based on the parametric curve affecting a function of a vehicle assistance system of the host vehicle, the function comprising at least one of displaying the parametric curve on a display of the host vehicle, conducting vehicle path planning, triggering a warning, or affecting control of the host vehicle during a parking process.

13. An apparatus comprising a vehicle assistance system configured to perform the method of any one of the previous claims.

**14.** A vehicle comprising an apparatus according to claim 13.

**15.** A non-transitory computer-readable storage medium comprising computer-executable instructions that, when executed by a computer system, cause the computer system to perform the method of any one of claims 1 through 12.

*FIG. 1*

*FIG. 2*

*FIG. 3*

*FIG. 4*

**Vehicle**
502

**Sensor(s)**
504

**Communication Device(s)**
506

**Processor(s)**
508

**Computer-Readable Storage Media**
510

**Autonomous Driving System**
512

**Motion Planner**
514

**Perception System**
516

*FIG. 5*

600

Measurement Processing
602

Measurement Extraction
604

Spline Points Determination
606

Parametric Curve Estimation
608

Prediction
610

Correction
612

Post Updates
614

Status Evaluation
616

Control Point Adjustment
618

Further cycle?
620

Yes

No

Suspend
622

*FIG. 6*

*FIG. 7*

*FIG. 8*

FIG. 9-1

FIG. 9-2

1000

1002 — Obtain a parametric curve that approximates spatial information representing a free space boundary around a host vehicle

1004 — Determine an approximation error indicator for each control point

1006 — Modify a section of the parametric curve near the respective control point based on the approximation error indicator

*FIG. 10*

Europäisches
Patentamt

European
Patent Office

Office européen
des brevets

## EUROPEAN SEARCH REPORT

**Application Number**

EP 23 17 4955

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 647 816 A (APOLO ZHENJIE BEIJING SCIENCE AND TECH CO LTD) 21 June 2022 (2022-06-21) * paragraph [0022] – paragraph [0023] * * paragraph [0043] – paragraph [0045] * * paragraph [0064] – paragraph [0071] * * paragraph [0087] * * paragraph [0118] * | 1-15 | INV. G01S15/931 G01S13/931 G01S17/931 |
| X | JO KICHUN ET AL: "Generation of a Precise Roadway Map for Autonomous Cars", IEEE TRANSACTIONS ON INTELLIGENT TRANSPORTATION SYSTEMS, IEEE, PISCATAWAY, NJ, USA, vol. 15, no. 3, 1 June 2014 (2014-06-01), pages 925-937, XP011549656, ISSN: 1524-9050, DOI: 10.1109/TITS.2013.2291395 [retrieved on 2014-05-29] * page 926, left-hand column, line 15 – page 927, left-hand column, line 5 * * page 929, right-hand column, line 10 – page 932, left-hand column, line 33 * | 1,13-15 | |
| A | US 2015/193953 A1 (ESFAHBOD MIRHOSSEINZADEH SARABI SEYED BEHDAD [CA] ET AL) 9 July 2015 (2015-07-09) * the whole document * | 1-15 | |
| A,D | YANG H ET AL: "Control point adjustment for B-spline curve approximation", COMPUTER-AIDED DESIGN, ELSEVIER PUBLISHERS BV., BARKING, GB, vol. 36, no. 7, 1 June 2004 (2004-06-01), pages 639-652, XP004502046, ISSN: 0010-4485, DOI: 10.1016/S0010-4485(03)00140-4 * the whole document * | 1-15 | |

**TECHNICAL FIELDS SEARCHED (IPC)**

G01S

-/--

The present search report has been drawn up for all claims

| Place of search | Date of completion of the search | Examiner |
|---|---|---|
| Munich | 28 October 2023 | López de Valle, J |

EPO FORM 1503 03.82 (P04C01)

page 1 of 2

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | SCHREIER MATTHIAS ET AL: "From grid maps to Parametric Free Space maps – A highly compact, generic environment representation for", 2013 IEEE INTELLIGENT VEHICLES SYMPOSIUM (IV), IEEE, 23 June 2013 (2013-06-23), pages 938-944, XP032501894, ISSN: 1931-0587, DOI: 10.1109/IVS.2013.6629587 [retrieved on 2013-10-10] * the whole document * | 1-15 | |

TECHNICAL FIELDS
SEARCHED      (IPC)

The present search report has been drawn up for all claims

| Place of search | Date of completion of the search | Examiner |
|---|---|---|
| Munich | 28 October 2023 | López de Valle, J |

## ANNEX TO THE EUROPEAN SEARCH REPORT
## ON EUROPEAN PATENT APPLICATION NO.

EP 23 17 4955

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2023

| Patent document cited in search report | | Publication date | Patent family member(s) | Publication date |
|---|---|---|---|---|
| CN 114647816 | A | 21-06-2022 | NONE | |
| US 2015193953 | A1 | 09-07-2015 | NONE | |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. STEYER ; G. TANZMEISTER ; D. WOLLHERR.** Grid Based Environment Estimation Using Evidential Mapping and Particle Tracking. *IEEE Transactions on Intelligent Vehicles,* September 2018, vol. 3 (3), 384-396
- **G. KRAETZSCHMAR ; G. P. GASSULL ; K. UHL.** Probabilistic Quadtrees for Variable-Resolution Mapping of Large Environments. *Proc. Of the 5th IFAC/EURON Symposium on Intelligent Autonomous Vehicles, Lisbon, Portugal,* July 2004
- **M. DARMS ; M. KOMAR ; S. LÜKE.** Map based Road Boundary Estimation. *Proc. of the IEEE Intelligent Vehicles Symposium, San Diego, California, USA,* June 2010
- **T.-N. NGUYEN ; M.-M. MEINECKE ; M. TORNOW ; B. MICHAELIS.** Optimized Grid-Based Environment Perception in Advanced Driver Assistance Systems. *Proc. of the IEEE Intelligent Vehicles Symposium, Xi'an, Shaanxi, China,* June 2009, 425-430
- **M. SCHREIER ; V. WILLERT ; J. ADAMY.** From grid maps to Parametric Free Space maps - A highly compact, generic environment representation for ADAS. *2013 IEEE Intelligent Vehicles Symposium (IV),* 2013, 938-944
- **YANG et al.** Control Point Adjustment for B-Spline Curve Approximation. *Computer-Aided Design,* 2004, vol. 36, 639-652
- **M. SCHREIER ; V WILLERT ; J. ADAMY.** From grid maps to Parametric Free Space maps - A highly compact, generic environment representation for ADAS. *2013 IEEE Intelligent Vehicles Symposium (IV),* 2013, 938-944